# EUROPÄISCHE PATENTANMELDUNG

(11) **EP 2 138 768 A2**
(43) Veröffentlichungstag der Anmeldung: **30.12.2009**
(21) Anmeldenummer: 09100322.8
(22) Anmeldetag: 05.06.2009
(51) Int. Cl.: F23Q 7/00, C04B 41/87

(54) **Verfahren zur Herstellung eines keramischen Schichtverbundes**

(30) Priorität: 16.06.2008 DE 102008002436
(71) Anmelder: Robert Bosch GmbH, 70442 Stuttgart (DE)
(72) Erfinder: Oberle, Juergen, 71065, Sindelfingen (DE); Liemersdorf, Susanne, 70839, Gerlingen (DE)

(57) **Zusammenfassung**

Die Erfindung betrifft ein Verfahren zur Herstellung eines keramischen Schichtverbundes, umfassend ein keramisches Substrat (18, 20, 21) und mindestens eine katalytisch aktive keramische Schicht (28), die auf das keramische Substrat (18, 20, 21) aufgetragen wird. Die katalytisch aktive keramische Schicht (28) wird durch Suspensionsplasmaspritzen auf das keramische Substrat (18, 20, 21) aufgetragen. Weiterhin betrifft die Erfindung die Verwendung des Verfahrens zur Herstellung von Siliziumnitrid-basierten Materialsystemen für Hochtemperaturanwendungen, die mit Kraftstoff in Berührung kommen.

## Beschreibung

### Stand der Technik

Die Erfindung geht aus von einem Verfahren zur Herstellung eines keramischen Schichtverbundes gemäß dem Oberbegriff des Anspruchs 1. Weiterhin betrifft die Erfindung eine Verwendung des Verfahrens.

Aufgrund ihrer hohen Temperaturstabilität werden Keramiken insbesondere in Umgebungen eingesetzt, in denen hohe Temperaturen auftreten können. So finden keramische Schichtverbünde, bei denen eine katalytisch aktive keramische Schicht auf ein keramisches Substrat aufgetragen ist, zum Beispiel Einsatz in Glühstiftkerzen von selbstzündenden Verbrennungskraftmaschinen. Auch als Widerstands- oder Sensorelemente, die korrosiven Gasgemischen, wie beispielsweise Abgasen von Verbrennungskraftmaschinen ausgesetzt sind, enthalten im Allgemeinen derartige keramische Schichtverbünde. Durch diese werden die Widerstands- oder Sensorelemente vor korrosiven Einflüssen geschützt.

Im Allgemeinen bildet sich auf der Oberfläche von Keramiken auf Basis von Siliziumnitrid, Siliziumcarbid oder auch auf der Basis von Siliziumoxycarbiden in Kontakt mit sauerstoffhaltigen Gasatmosphären bei erhöhten Temperaturen eine selbstschützende, oxidische, glasartige Schicht aus. Diese Schicht ist jedoch im Allgemeinen relativ dünn und hält beispielsweise einer Dauerbelastung durch Einwirkung von Abgasen von Verbrennungskraftmaschinen nicht zuverlässig stand.

Bei Verwendung des keramischen Schichtverbundes als Heizelement in einer Glühstiftkerze besteht die Gefahr, dass sich beispielsweise bei nicht optimierter Verbrennung Rußablagerungen am Glühstift bilden. Diese Rußablagerungen können eine spätere Demontage der Glühstiftkerze erschweren. Wenn der außenliegende Teil der keramischen Glühstiftkerze elektrisch leitfähig ist, können Rußablagerungen zudem eine Leiterbahn zum Gehäuse ausbilden, wodurch die Glühstiftkerze gegebenenfalls nicht mehr korrekt betrieben werden kann. Auch können integrierte Sensorfunktionen der Glühstiftkerze, zum Beispiel eine Ionenstrommessung, nicht mehr gewährleistet werden.

Aus DE-A 10 2005 015 569 ist es bekannt, ein keramisches Widerstands- oder Sensorelement mit einer Beschichtung zu versehen. Die Beschichtung enthält Kupfer, Cer und/oder Vanadium. Das Aufbringen der Beschichtung erfolgt zum Beispiel durch Eintauchen, Aufdrucken, Aufrollen, Imprägnieren oder durch Luftdruck- bzw. Ultraschallvernebelung aufgebracht und anschließend bei Temperaturen von über 500°C einer Behandlungszeit von 0,25 bis 12 Stunden unterzogen. Durch die beschriebenen Verfahren lassen sich jedoch nur relativ große Schichtdicken erzielen.

### Offenbarung der Erfindung

### Vorteile der Erfindung

Beim erfindungsgemäßen Verfahren zur Herstellung eines keramischen Schichtverbundes, umfassend ein keramisches Substrat und mindestens eine katalytisch aktive keramische Schicht, die auf das keramische Substrat aufgetragen wird, erfolgt das Auftragen der katalytisch aktiven keramischen Schicht auf das keramische Substrat durch Suspensionsplasmaspritzen.

Durch das Suspensionsplasmaspritzen ist es nicht erforderlich, das gesamte keramische Substrat aufzuheizen, um die aufgebrachte keramische Schicht zu härten. Insbesondere bei Bauteilen, die neben dem keramischen Schichtverbund auch metallische Bauteile enthalten, wie dies beispielsweise bei Glühstiftkerzen für selbstzündende Verbrennungskraftmaschinen der Fall ist, werden die metallischen Bauteile weniger stark thermisch belastet. Das Aufbringen der katalytisch aktiven keramischen Schicht kann so zum Beispiel auch bei bereits montierten Glühstiftkerzen erfolgen. Es ist nicht notwendig, zunächst die Beschichtung aufzubringen und im Anschluss an die Beschichtung die Glühstiftkerze zu montieren.

Beim Suspensionsplasmaspritzen wird zunächst ein Plasma erzeugt. In das Plasma wird eine Suspension injiziert. Die Partikel der Suspension verdampfen und kondensieren auf dem zu beschichtenden keramischen Substrat wieder aus. Durch das Auskondensieren bildet sich eine dünne Schicht aus. Um eine gleichmäßige Schichtdicke und eine vollständige Beschichtung zu erzielen, ist es notwendig, dass das keramische Substrat gleichmäßig von der Suspension getroffen werden muss. Hierzu ist es einerseits möglich, das Substrat im Plasma zu bewegen, andererseits kann auch der Plasmastrahl so abgelenkt werden, dass dieser über das Substrat streicht.

Als Plasmen für das Suspensionsplasmaspritzen eignen sich sowohl induktiv angeregte thermische Plasmen als auch Lichtbogenplasmen. Die Erzeugung solcher Plasmen ist dem Fachmann bekannt.

In einer ersten Ausführungsform wird beim Suspensionsplasmaspritzen, mit dem die katalytisch aktive keramische Schicht auf das keramische Substrat aufgebracht wird, eine Suspension eingesetzt, die Partikel enthält, die eine mittlere Partikelgröße im Bereich von 0,5 bis 10 µm aufweisen. Die Partikel in der Suspension atomisieren im Plasma und werden auf dem keramischen Substrat unter Ausbildung einer Schicht abgeschieden. Das ebenfalls verdampfende Dispergiermittel der Suspension wird mit dem Plasmagas ausgetragen.

Als Dispergiermittel für die Suspension wird im Allgemeinen Wasser eingesetzt. Es kann aber auch jedes geeignete andere, dem Fachmann bekannte Dispergiermittel eingesetzt werden. Das Verhältnis von Feststoff zu Dispergiermittel liegt im Allgemeinen im Bereich von 0,5 zu 1 bis 1,25 zu 1.

In einer alternativen, bevorzugten Ausführungsform wird beim Suspensionsplasmaspritzen ein Sol eingesetzt, um die katalytisch aktive keramische Schicht auf das keramische Substrat aufzutragen. Das Sol enthält Partikel, deren mittlere Partikeldurchmesser im Bereich von 2 bis 50 nm liegt. Vorteil des Einsatzes eines Sols ist, dass sich aufgrund der kleineren enthaltenen Partikel noch geringere Schichtdicken realisieren lassen als bei einer Suspension.

Das Sol weist vorzugsweise einen Feststoffgehalt im Bereich von 5 bis 30 Gew.-% auf. Besonders bevorzugt liegt der Feststoffgehalt in einem Bereich von 15 bis 25 Gew.-%. Als Dispergiermittel, in dem die Partikel dispergiert werden, eignet sich zum Beispiel Wasser.

Als Plasmagas zur Erzeugung des Plasmas wird üblicherweise Argon, Wasserstoff, Helium oder eine Mischung daraus eingesetzt. Der Anteil an Argon im Plasmagas liegt vorzugsweise im Bereich von 0 bis 100 Vol.-%, der Anteil an Wasserstoff im Bereich von 0 bis 30 Vol.-% und der Anteil an Helium im Bereich von 0 bis 50 Vol.-%. Der eingesetzte Gasvolumenstrom liegt vorzugsweise im Bereich von 3 bis 60 slm (Standard-Liter pro Minute).

Abhängig von der eingesetzten Suspension bzw. dem eingesetzten Sol lassen sich durch das Suspensionsplasmaspritzen Schichtdicken im Bereich zwischen 1 µm und 1 mm erzielen. Insbesondere können Schichtdicken realisiert werden, die im Bereich zwischen 1 µm und 300 µm liegen.

Insbesondere wenn der keramische Schichtverbund in Umgebungen bei sehr hohen Temperaturen eingesetzt wird, zum Beispiel als Glühstiftkerze in einer selbstzündenden Verbrennungskraftmaschine, an der üblicherweise Temperaturen bis zu 1500°C auftreten können, ist das keramische Substrat vorzugsweise ein auf Siliziumnitrid basierendes Substrat. Neben dem Einsatz als Glühstiftkerze in einer selbstzündenden Verbrennungskraftmaschine eignet sich der erfindungsgemäß hergestellte keramische Schichtverbund zum Beispiel auch zur Herstellung von Wendeschneidplatten, Widerstands- oder Sensorelementen oder beliebige andere Werkstücke, die hohen Temperaturen ausgesetzt werden. Insbesondere bei Wendeschneidplatten, wie sie zum Beispiel in Drehmaschinen eingesetzt werden, entstehen hohe Temperaturen aufgrund der Reibungswärme bei der spanenden Bearbeitung von Werkstücken. Durch die katalytisch aktive Schicht wird eine zusätzliche Schutzschicht auf das keramische Substrat aufgebracht, die das Substrat vor schädigenden Einflüssen schützt. Neben Siliziumnitrid eignet sich zum Beispiel auch Siliziumcarbid oder ein siliziumorganisches Polymer als Material für das keramische Substrat.

Die katalytisch aktive Schicht, die auf das keramische Substrat aufgetragen wird, enthält vorzugsweise Kupfer, Cer, Vanadium oder Mischungen daraus. Der Gehalt an Kupfer, Cer bzw. Vanadium beträgt beispielsweise mehr als 90 Gew.-%. Weiterhin kann die Beschichtung Oxide der Elemente Zirkon, Titan, Aluminium, Yttrium, Chrom und/oder Kalzium enthalten. Auf diese Weise werden Beschichtungen erzielt, die aufgrund der zugesetzten Oxide langzeitstabil sind, und die, insbesondere beim Einsatz an Glühstiftkerzen, wirksam den Abbrand von abgelagertem Ruß katalysieren.

Darüber hinaus kann die katalytisch aktive keramische Schicht bis zu 10 Gew.-% der Elemente Platin, Palladium und/oder Rhodium umfassen. Auf diese Weise lässt sich die Beschichtung zum Beispiel auf das konkrete Anwendungsgebiet eines Widerstands- bzw. Sensorelements ausrichten.

Das Kupfer, Cer oder Vanadium ist vorzugsweise ebenfalls als Oxid in der katalytisch aktiven Schicht enthalten. Das Cer liegt dabei vorzugsweise als CeO₂ und/oder Ce₂O₃ vor.

Das Material für die katalytisch aktive Schicht liegt in der Suspension, die durch das Suspensionsplasmaspritzen auf das keramische Substrat aufgebracht wird, in gleicher Zusammensetzung wie in der späteren Schicht in Form von Partikeln vor.

Der keramische Schichtverbund wird zum Beispiel zur Herstellung von Siliziumnitrid-basierten Materialsystem für Hochtemperaturanwendungen, die mit Kraftstoff in Berührung kommen eingesetzt. So eignet sich das Siliziumnitrid-basierte Materialsystem zum Beispiel zur Herstellung von Glühstiftkerzen für selbstzündende Verbrennungskraftmaschinen. Durch die katalytisch aktive Schicht wird verhindert, dass sich leitende Strukturen durch abgelagerten Ruß zum Gehäuse bilden können. Darüber hinaus kann durch die katalytisch aktive keramische Schicht die Entflammungstemperatur des Kraftstoffes herabgesetzt werden, so dass eine den keramischen Schichtverbund enthaltende Glühstiftkerze bereits bei tieferen Temperaturen betrieben werden kann und sich somit deren Lebensdauer erhöht.

### Kurze Beschreibung der Zeichnungen

Ausführungsbeispiele der Erfindung sind in der Zeichnungen dargestellt und werden in der nachfolgenden Beschreibung näher erläutert.

Es zeigen:
- Figur 1: ein Ausführungsbeispiel einer Glühstiftkerze im Längsschnitt, die ein Wider-standselement aus dem erfindungsgemäß hergestellten keramischen Schichtver-bund enthält.
- Figur 2: ein Glühstift einer Glühstiftkerze in einer zweiten Ausführungsform.

### Ausführungsformen der Erfindung

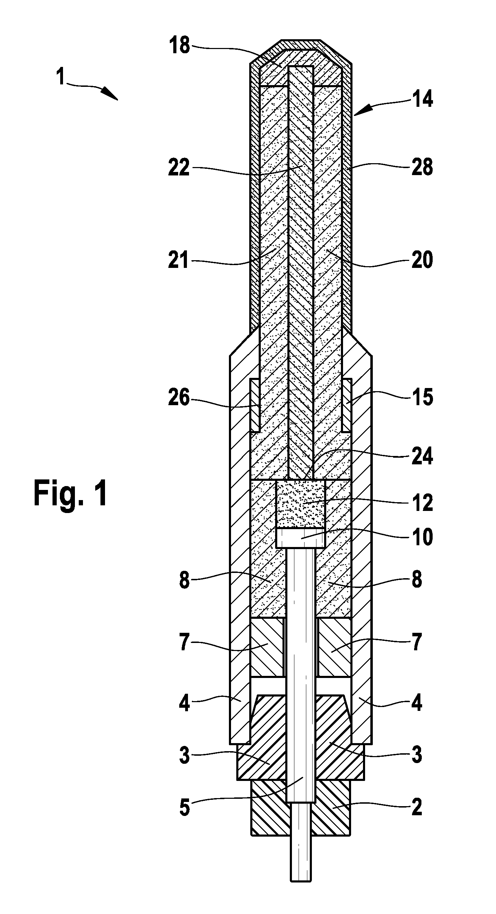

Figur 1 zeigt einen Längsschnitt durch eine ein keramisches Widerstandselement aus einem erfindungsgemäß hergestellten keramischen Schichtverbund enthaltende Glühstiftkerze 1. An einem brennraumfernen Ende der Glühstiftkerze 1 erfolgt eine elektrische Kontaktierung über einen Rundstecker 2, der über eine Dichtung 3 von einem metallischen Kerzengehäuse 4 getrennt mit einer zylinderförmigen Zuleitung 5 verbunden ist. Die Fixierung der zylindrischen Zuleitung 5 im Kerzengehäuse 4 erfolgt über einen Metallring 7 und eine elektrisch isolierende Keramikhülse 8. Die zylinderförmige Zuleitung 5 ist über einen Kontaktstift 10 und ein geeignetes Kontaktierungselement 12, das vorzugsweise als Kontaktfeder, als elektrisch leitfähige Pulverpackung oder als elektrisch leitfähige Tablette mit einem elastischen Federanteil, vorzugsweise aus Graphit, ausgebildet ist, mit einem keramischen Glühstift 14 verbunden. Die zylinderförmige Zuleitung 5 kann auch mit dem Kontaktstift 10 in einem Bauteil vereinigt sein. Das Innere der Glühstiftkerze 1 wird mittels einer Dichtpackung 15 gegenüber dem Brennraum abgedichtet. Die Dichtpackung 15 besteht zum Beispiel aus einer elektrisch leitenden Kohlenstoffverbindung. Die Dichtpackung 15 kann aber auch durch Metalle, eine Mischung aus Kohlenstoff und Metall oder eine Mischung aus Keramik und Metall ausgebildet sein.

Die Glühstiftkerze 1 umfasst weiterhin ein Widerstandselement in Form eines Glühstifts 14, der aus einer keramischen Heizschicht 18 und keramischen Zuleitungsschichten 20 und 21 gebildet ist, wobei die beiden Zuleitungsschichten 20, 21 durch die Heizschicht 18 verbunden sind und mit der Heizschicht 18 zusammen eine Leitschicht bilden. Die Zuleitungsschichten 20, 21 besitzen eine beliebige Form, auch die Heizschicht 18 kann eine beliebige Form besitzen. Vorzugsweise ist die Leitschicht U-förmig ausgebildet. Die Zuleitungsschichten 20, 21 sind über eine Isolationsschicht 22, die ebenfalls aus keramischem Material gefertigt ist, voneinander getrennt. In der hier dargestellten Ausführungsform ist der Glühstift 14 derart gestaltet, dass die Zuleitungsschichten 20, 21 sowie die Heizschicht 18 auf der Außenseite des Glühstifts 14 angeordnet sind. Es ist jedoch auch möglich, zumindest die Zuleitungsschichten 20, 21 so anzuordnen, dass sie sich innerhalb des Glühstiftes 14 befinden und noch von einer außenliegenden, keramischen, isolierenden Schicht bedeckt werden. Innerhalb des Kerzengehäuses 4 ist der keramische Glühstift 14 durch eine nicht dargestellte Glasschicht von den übrigen Bestandteilen der Glühstiftkerze 4, 8, 12, 15 isoliert.

Um den elektrischen Kontakt zwischen dem Kontaktierungselement 12 und der Zuleitungsschicht 20 herzustellen, ist die Glasschicht an der Stelle 24 unterbrochen. Eine weitere Durchbrechung der Glasschicht an der Stelle 26 ermöglicht einen elektrischen Kontakt zwischen Zuleitungsschicht 21 und Kerzengehäuse 4 über die Dichtpackung 15. Bei der hier dargestellten Ausführungsform wurde die Heizschicht 18 an der Spitze des Glühstiftes 14 platziert. Es ist jedoch auch denkbar, die Heizschicht 18 an einer anderen Stelle der Leitschicht zu platzieren. Die Heizschicht 18 sollte sich an der Stelle befinden, an der die größte Heizwirkung erzielt werden soll.

Das Material der Heizschicht 18 wird so gewählt, dass der absolute elektrische Widerstand der Heizschicht 18 größer ist als der absolute elektrische Widerstand der Zuleitungsschichten 20, 21. Um Querströme zwischen den Komponenten der Leitschicht zu vermeiden, ist der Widerstand der Isolationsschicht 22 vorzugsweise deutlich größer als der Widerstand der Heizschicht 18 und der Zuleitungsschichten 20, 21.

In einer bevorzugten Ausführungsform ist der spezifische Widerstand der Isolationsschicht 22 im gesamten Betriebsbereich der Glühstiftkerze mindestens zehnmal größer als der spezifische Widerstand der Heizschicht 18.

Die Zusammensetzungen der Isolationsschicht 22, der Zuleitungsschichten 20, 21 und der Heizschicht 18 werden so gewählt, dass ihre thermischen Ausdehnungskoeffizienten und die während des Sinter- bzw. Pyrolyseprozesses auftretenden Schrumpfungen der einzelnen Zuleitungs-, Heiz- und Isolationsschichten möglichst gleich sind, so dass keine Risse im Glühstift entstehen.

Die Heizschicht 18 wird vorzugsweise aus einer elektrisch leitfähigen Keramik mit einem hohen elektrischen Widerstand ausgeführt. Hierbei handelt es sich vorzugsweise um einen keramischen Widerstand auf der Basis eines mit Füllstoffen versehenen siliziumorganischen Polymers, beispielsweise eines Polysiloxans oder eines Polysilesquioxans. Als Polysiloxan wird beispielsweise ein kondensationsvernetztes Polyalkoxysiloxan oder ein additionsvernetzendes Polysiloxan, beispielsweise ein Methyl-Phenyl-Vinyl-Polysiloxan verwendet. Den verwendeten Siloxanen können weitere Polymere, beispielsweise Polycarbosilane und Polysilane zugesetzt werden. Diese können in einem geeigneten Lösungsmittel, beispielsweise Aceton oder Tetrahydrofuran gelöst und mit geeigneten Füllstoffen versetzt werden. Über die Auswahl und Zugabemenge eines oder mehrere geeigneter Füllstoffe kann der elektrische Widerstand der resultierenden Keramik gezielt eingestellt werden. Geeignete Füllstoffe sind beispielsweise Molybdändisilizid, Chromdisilizid, Eisenpulver, Siliziumnitrid, Siliziumpulver, Titansilizid, Ceroxid, Wismutoxid, Bariumoxid, Siliziumcarbid, Borcarbid, Bornitrit, Wolframcarbid oder Graphit sowie gegebenenfalls auch Kohlenstoffnanoröhrchen oder Aluminiumoxid. Die Zuleitungsschichten 20, 21 können in ähnlicher Weise ausgeführt werden, wobei deren elektrischer Widerstand beispielsweise durch Zusatz elektrisch leitfähiger Füllstoffe modifiziert werden kann.

Bedingt durch die im Brennraum ablaufenden Verbrennungsprozesse kann es zu einer unerwünschten Verkokung der keramischen Oberfläche des Glühstiftes 14 kommen. Diese Gefahr besteht insbesondere dann, wenn der Glühstift nicht angesteuert wird oder die Verbrennungsprozesse nicht im Bereich eines optimalen Umsatzes stattfinden. Diese Verkokung kann eine spätere Demontage des Glühstiftes erschweren.

Aus diesem Grund wird auf dem dem Verbrennungsraum ausgesetzten keramischen Außenflächen des Glühstiftes eine katalytisch aktive keramische Beschichtung 28 aufgebracht. Diese erlaubt einen Abbrand sich anlagernder Rußpartikel bei niedrigen Temperaturen. Die Beschichtung enthält als Hauptkomponenten vorzugsweise Kupfer, Cer oder Vanadium bzw. Mischungen daraus. Dabei ist insbesondere ein Gesamtgehalt an Verbindungen des Kupfers, Cers bzw. Vanadiums von mehr als 85 Gew.-%, insbesondere mehr als 90 Gew.-% von Vorteil. Vorzugsweise sind die genannten Elemente Kupfer, Cer und Vanadium in der katalytisch aktiven keramischen Schicht 28 als Oxide enthalten.

Ein weiterer Vorteil der katalytisch aktiven keramischen Schicht 28 ist darin zu sehen, dass die Entflammungstemperatur des im Verbrennungsraum verbrannten Kraftstoffes bedingt durch die katalytische Funktion gegebenenfalls abgesetzt wird, so dass die Glühstiftkerze bei tieferen Temperaturen betrieben werden kann und sich somit deren Lebensdauer erhöht.

Neben Kupfer, Cer oder Vanadium kann die Beschichtung weiterhin bis zu 20 Gew.-%, insbesondere bis zu 10 Gew.-% der Platinmetalle Platin, Palladium, Rhodium und/oder Iridium enthalten.

Weiterhin kann die katalytisch aktive keramische Schicht 28 hochschmelzende Metalloxide, beispielsweise Elemente Zirkon, Titan, Aluminium, Yttrium, Chrom oder Kalzium sowie Mischungen derselben enthalten, um einer möglichen Alterung der katalytisch aktiven Komponenten der Beschichtung entgegenzuwirken.

Erfindungsgemäß wird die katalytisch aktive keramische Schicht 28 durch Suspensionsplasmaspritzen auf die Zuleitungsschichten 20, 21 sowie die Heizschicht 18 aufgebracht. Das Aufbringen der katalytisch aktiven keramischen Schicht 28 durch das Suspensionplasmaspritzen kann vor der Montage der Glühstiftkerze oder bei bereits fertig montierter Glühstiftkerze erfolgen. Durch das Suspensionsplasmaspritzen kann auf die bei Nassauftragsverfahren erforderliche Behandlung bei hohen Temperaturen verzichtet werden, so dass die thermische Belastung bei der Produktion reduziert wird.

Um die Schichthaftung des durch Suspensionsplasmaspritzen aufgetragenen keramischen katalytisch aktiven Materials auf das keramische Substrat zu verbessern, ist es möglich, wenn die Glühstiftkerze während des Beschichtungsprozesses zu glühen.

Zudem kann durch das Suspensionsplasmaspritzen eine Schichtdicke erzielt werden, die unterhalb der durch nasschemische Verfahren erzeugten Schichtdicken liegt. Dies führt zu einem geringeren Einfluss der katalytisch aktiven keramischen Schicht zum Beispiel auf die Glühfunktion einer Glühstiftkerze.

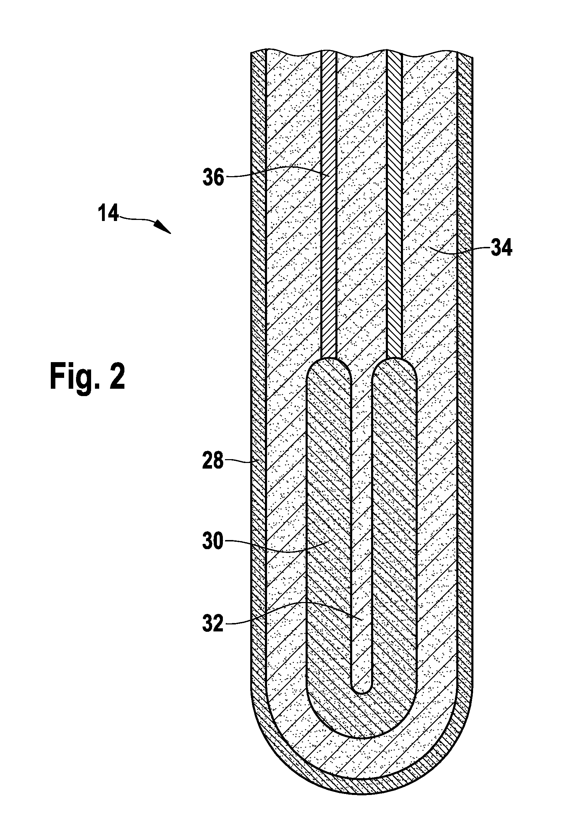

In Figur 2 ist ein Glühstift 14 in einer zweiten Ausführungsform dargestellt.

Der in Figur 2 dargestellte Glühstift umfasst ein Heizelement 30 aus einer elektrisch leitfähigen Keramik. Als elektrisch leitfähige Keramik wird zum Beispiel Siliziumnitrid eingesetzt, das geeignete leitfähige Zusätze als Füllstoff enthält. In der in Figur 2 dargestellten Ausführungsform ist das Heizelement 30 u-förmig ausgebildet und umschließt einen Kern 32 aus einer elektrisch nicht leitfähigen Keramik. An der Außenseite ist das Heizelement 30 von einem Mantel 34 aus einer elektrisch nicht leitfähigen Keramik umschlossen. Üblicherweise werden der Kern 32 und der Mantel 34 aus dem gleichen Material gefertigt. Als Material eignet sich zum Beispiel Siliziumnitrid.

Erfindungsgemäß wird auf den Mantel 34 die katalytisch aktive Schicht 28 durch ein Suspensionsplasmaspritzverfahren aufgebracht. Die katalytisch aktive Schicht 28 entspricht dabei der in der in Figur 1 dargestellten Ausführungsform.

Die elektrische Kontaktierung des Heizelements 30 erfolgt zum Beispiel durch auf den Kern 32 aufgedruckte elektrische Leiter 36. Alternativ ist es auch möglich, zum Beispiel Drähte als elektrische Leiter 36 einzusetzen. Als Material für die Drähte wird vorzugsweise ein Werkstoff gewählt, der einen ähnlichen Wärmeausdehnungskoeffizienten aufweist wie die Keramik. Ein geeigneter Werkstoff ist zum Beispiel Wolfram.

## Patentansprüche

1. Verfahren zur Herstellung eines keramischen Schichtverbundes, umfassend ein keramisches Substrat (18, 20, 21) und mindestens eine katalytisch aktive keramische Schicht (28), die auf das keramische Substrat (18, 20, 21) aufgetragen wird, **dadurch gekennzeichnet, dass** die katalytisch aktive keramische Schicht (28) durch Suspensionsplasmaspritzen auf das keramische Substrat (18, 20, 21) aufgetragen wird.

2. Verfahren gemäß Anspruch 1, **dadurch gekennzeichnet, dass** beim Suspensionsplasmaspritzen eine Suspension eingesetzt wird, wobei in der Suspension enthaltene Partikel eine mittlere Partikelgröße im Bereich von 0,5 bis 10 µm aufweisen.

3. Verfahren gemäß Anspruch 1, **dadurch gekennzeichnet, dass** beim Suspensionsplasmaspritzen ein Sol eingesetzt wird, wobei das Sol Partikel enthält, deren mittlerer Partikeldurchmesser im Bereich von 2 bis 50 nm liegt.

4. Verfahren gemäß Anspruch 3, **dadurch gekennzeichnet, dass** das Sol einen Feststoffgehalt im Bereich von 5 bis 30 Gew.-% aufweist.

5. Verfahren gemäß einem der Ansprüche 1 bis 4, **dadurch gekennzeichnet, dass** als Plasmagas für das Suspensionsplasmaspritzen Argon, Wasserstoff, Helium oder eine Mischung daraus eingesetzt wird.

6. Verfahren gemäß Anspruch 5, **dadurch gekennzeichnet, dass** das Plasmagas 0 bis 100 Vol.-% Argon, 0 bis 30 Vol.-% Wasserstoff und 0 bis 50 Vol.-% Helium enthält.

7. Verfahren gemäß einem der Ansprüche 1 bis 6, **dadurch gekennzeichnet, dass** der Gasvolumenstrom im Bereich von 3 bis 60 slm liegt.

8. Verfahren gemäß einem der Ansprüche 1 bis 7, **dadurch gekennzeichnet, dass** das keramische Substrat (18, 20, 21) ein auf Siliziumnitrid basierendes Substrat ist.

9. Verfahren gemäß einem der Ansprüche 1 bis 8, **dadurch gekennzeichnet, dass** die katalytisch aktive Schicht (28), die auf das keramische Substrat (18, 20, 21) aufgetragen wird, Kupfer, Cer, Vanadium oder Mischungen daraus enthält.

10. Verfahren gemäß Anspruch 9, **dadurch gekennzeichnet, dass** das Kupfer, Cer oder Vanadium als Oxid in der katalytisch aktiven Schicht (28) enthalten ist.

11. Verwendung des Verfahrens gemäß einem der Ansprüche 1 bis 10 zur Herstellung von Siliziumnitrid-basierten Materialsystemen für Hochtemperaturanwendungen, die mit Kraftstoff in Berührung kommen.

12. Verwendung gemäß Anspruch 10, **dadurch gekennzeichnet, dass** das Siliziumnitrid-basierte Materialsystem eine Glühstiftkerze für eine selbstzündende Verbrennungskraftmaschine ist.
